# EUROPÄISCHE PATENTSCHRIFT

(11) **EP 2 860 017 B1**
(45) Veröffentlichungstag und Bekanntmachung des Hinweises auf die Patenterteilung: **11.01.2017**
(21) Anmeldenummer: 13188119.5
(22) Anmeldetag: 10.10.2013
(51) Int. Cl.: B29C 51/44, B29L 31/00, B29L 31/56, B29C 51/22, B29C 51/26, B29C 51/32, B29C 51/46, B65G 57/16

(54) **THERMOFORMMASCHINE**
THERMOFORMING MACHINE
MACHINE DE THERMOFORMAGE

(43) Veröffentlichungstag der Anmeldung: 15.04.2015
(73) Patentinhaber: Gabler Thermoform GmbH & Co. KG, 23568 Lübeck (DE)
(72) Erfinder: Hüttig, Jörg, 23569 Lübeck (DE); Schmidt, Detlev, 23569 Lübeck (DE)
(74) Vertreter: Grosse, Wolf-Dietrich Rüdiger

(56) Entgegenhaltungen:
- EP-A2- 0 128 423
- DE-A1- 19 848 627
- US-A- 3 622 017
- US-A- 3 622 040

## Beschreibung

Die Erfindung betrifft eine Thermoformmaschine mit einer speicherprogrammierbaren Steuerung zum Formen und Stanzen von tiefgezogenen, beliebigen becher- oder deckelartigen Artikeln aus thermoplastischem, über einen intermittierenden Folientransport zugeführtem Kunststoff oder dergleichen, umfassend ein mit mehreren über- bzw. nebeneinander liegenden Artikelreihen ausgebildetes Mehrfach-Form- und Stanzwerkzeug, bestehend aus einem Oberwerkzeug und einem zum Abstapeln der Fertigartikel ausschwenkbaren Unterwerkzeug, dem in einer nachgeschalteten automatischen Stapel- und Zählvorrichtung eine die nach dem Schwenken des Maschinentisches bzw. des Unterwerkzeugs aus der Maschine ausgestoßenen Artikel in komplementären Ausnehmungen zu Artikelstangen zusammenführende, verfahrbare Fangplatte zugeordnet ist, wobei die fertigen Artikelstangen der Fangplatte von einer mit an die Kontur der Artikel angepasste Durchtrittsöffnungen aufweisenden Aufnahmeplatte eines Stapelkorbes überfahren und in den Stapelkorb zum weiteren Transport übergeleitet werden.

Eine solche Thermoformmaschine ist beispielsweise durch die DE 198 48 627 B4 bekanntgeworden.

Die der Thermoformmaschine nachgeschaltete Stapel- und Zählvorrichtung umfasst eine verfahrbare Fangplatte, die entsprechend der Anzahl der in dem Unterwerkzeug der Thermoformmaschine in über- und nebeneinander liegenden Reihen vorgesehenen Farmnester eine entsprechende Zahl von Ausnehmungen aufweist, in die die Fertigartikel von Ausstoßern der Thermoformmaschine eingebracht und dort zu Artikelstangen mit einer durch die speicherprogrammierbare Steuerung der Thermoformmaschine vorgegebenen Anzahl von Fertigartikeln ineinander gestapelt werden. Die Stapel- und Zählvorrichtung weist weiterhin einen Stapelkorb auf, der die Artikelstangen von der Fangplatte übernimmt und aus dem die Artikelstangen auf ein Transportband oder dergleichen Mittel abgegeben werden.

Der Stapelkorb ist zur Abnahme der Artikelstangen in Richtung auf die Fangplatte und nach der Abnahme der Artikelstangen in eine von der Fangplatte entfernte Endladestation verfahrbar.

Die von dem Stapelkorb aufgenommenen einzelnen Fertigartikel und dann die Artikelstangen werden durch Rückhalteeinrichtungen in Form von Scharnieren, Schenkel- oder Blattfedern und dergleichen zurückgehalten.

Ferner ist aus der EP 0 955 150 B1 eine einer Thermoformmaschine nachgeschaltete Stapel- und Zählvorrichtung bekannt, bei der die ausgeformten und -gestanzten Artikel auf einer unteren Stapelplatte abgestapelt werden. Sobald die über die speicherprogrammierbare Steuerung angewählte Artikel-Stückzahl in der unteren Stapelplatte erreicht ist, wird eine mit zu den Artikeln komplementär ausgebildeten Kavitäten bzw. Durchbrüchen versehene obere Stapelplatte abgesenkt bzw. über die untere Stapelplatte gefahren und übernimmt die Artikelstangen; durch Abheben bzw. Wegfahren der oberen Stapelplatte kommen die Artikelstangen frei von der unteren Stapelplatte.

Von der oberen Stapelplatte aus können die Artikelstangen dann einem Ablageblech, einem Transportband oder dergleichen Mittel zur weiteren Bearbeitung zugeführt werden.

Zur Aufnahme bzw. zum Herausziehen der Artikelstangen aus der unteren Stapelplatte, ist die obere Stapelplatte im Bereich ihrer Kavitäten bzw. Durchbrüche mit Halte- bzw. Auszugselementen versehen.

Die bekannten Halte- bzw. Auszugelemente in Form von Scharnieren, Konen oder Federn drücken beim Überfahren gegen die Artikelstangen, wobei insbesondere die Federn bei becherartigen Artikeln durch deren oberen, gegenüber dem übrigen Korpus umlaufend breiteren Becherrand zurückgedrückt werden und nach dessen Passieren wieder gegen den Behälterkorpus vorspringen.

Insbesondere dann, wenn die Artikelstangen nicht ordentlich in einer Flucht ineinander gestapelt sind, sondern einzelne Artikel verkantet oder schräg zueinander eingestapelt sind, werden diese von den Scharnieren, Konen oder Federn zurück oder weiter zur Seite gedrückt, was zu Störungen im getakteten Bewegungsfluss der Artikelentnahme und letztendlich zu einer Abschaltung der Thermoformmaschine führen kann.

Der Erfindung liegt daher die Aufgabe zugrunde, eine Stapel- und Zählvorrichtung einer Thermoformmaschine der eingangs genannten Art zu schaffen, die auf einfache Weise eine prozesssichere und artikelschonende Entnahme der Fertigartikel aus der Fangplatte ermöglicht.

Diese Aufgabe wird erfindungsgemäß durch die im kennzeichnenden Teil des unahängigen Anspruchs angegebenden Merkmale gelöst. Jeder Durchtrittsöffnung ist rechts- und linksseitig jeweils eine Halteleiste zugeordnet, wobei die Aufnahmeplatte mit nebeneinander liegenden Reihen von Durchtrittsöffnungen ausgebildet ist und die Anzahl der Durchtrittsöffnungen der Anzahl der von der Fangplatte bereitgestellten Artikelstangen entspricht.

In der ersten Position der Halteleisten überfährt die Aufnahmeplatte des Stapelkorbes mit ihren Durchtrittsöffnungen ungehindert die Artikelstangen der Fangplatte, wobei die Durchtrittsöffnungen die Artikelstange mit ausreichend Luft umschließen, d.h. kontaktfrei zu den fertigen Artikeln bleiben.

Sobald die Aufnahmeplatte mit den Durchtrittsöffnungen den zuletzt eingestapelten Artikel der Artikelstange passiert hat, werden die Halteleisten in die zweite Position verfahren, in der sie das Öffnungsmaß der Durchtrittsöffnungen verringern und sich hinter den zuletzt eingestapelten Artikel einer jeden Artikelstange legen, diese beim Verfahren des Stapelkorbes von hinten abstützen und in der Entnahmeposition zur Übergabe beispielsweise auf ein Förderband mit dem Vorschub der Aufnahmeplatte ausschieben.

In der ersten, angehobenen Position befinden sich die bei becherförmigen Artikeln konkaven, halbkreisförmigen Ausnehmungen der Halteleiste in Deckungslage mit den seitlichen Begrenzungsradien der Durchtrittsöffnungen, so dass der vollständige Durchmesser bzw. das gesamte Innenmaß der Durchtrittsöffnungen zum berührungsfreien Passieren der Artikelstangen zur Verfügung steht.

In der zweiten, abgesenkten Position tauchen die Halteleisten mit einem Teilbereich ihrer außerhalb der halbkreisförmigen Ausnehmung vorhandenen Kernbreite in die Durchtrittsöffnungen ein, so dass die geraden, von Ausnehmungen freien Teilbereiche der Halteleisten über den seitlichen Radius der Durchtrittsöffnungen nach innen vorspringen und somit das Öffnungsmaß verringern. Das gilt so gleichermaßen für den Fall, dass die Artikel nicht horizontal, sondern vertikal zu Stapeln zusammengefasst werden, wobei die Halteleisten dann statt angehoben und abgesenkt zu werden, horizontal vor und zurück verfahren werden.

Des weiteren ist erfindungsgemäß vorgesehen, dass die die Halteleiste tragende Verschiebeleiste über mindestens einen an der Aufnahmeplatte angeordneten Hubzylinder verfahrbar ist. Vorzugsweise wirkt je ein Hubzylinder auf ein äußeres Ende der Verschiebeleiste, so dass die Verschiebeleiste beidseitig gleichmäßig beaufschlagt angehoben und abgesenkt wird, wodurch ein synchrones und verkantungsfreies Verfahren der in die Aufnahmeplatte integrierten Haltleisten gewährleistet ist.

Die Ansteuerung der Hubzylinder erfolgt vorzugsweise über Mehrwegeventile, insbesondere 5/2-Wegeventile, die schaltungstechnisch in die speicherprogrammierbare Steuerung und somit in den schrittweisen Funktionsablauf der Thermoformmaschine eingebunden sind.

Zum Erfassen und zum Überwachen der angehobenen und abgesenkten Position der Verschiebeleiste ist erfindungsgemäß ein optischer Nährungsinitiator am Stapelkorb angeordnet, der mit der speicherprogrammierbaren Steuerung der Thermoformmaschine verbunden ist.

Weitere Einzelheiten und Merkmale der Erfindung ergeben sich aus den Ansprüchen und der nachfolgenden Beschreibung eines in den Figuren zum Teil schematisch dargestellten Ausführungsbeispiels der Erfindung. Es zeigen:
Fig. 1 als Einzelheit einer Stapel- und Zählvorrichtung eine Durchtrittsöffnungen und Halteleisten aufweisende Aufnahmeplatte eines Stapelkorbes für von einer Fangplatte einer Thermoformmaschine entnommenen Artikelstangen, in der Vorderansicht dargestellt;
Fig. 2 in einer perspektivischen Ansicht die mit - unvollständig angedeuteten - Stapelstäben und einer Abschlussplatte einen Stapelkorb bildende Aufnahmeplatte;
Fig. 3 eine Teilansicht der Aufnahmeplatte mit daran angeordnetem Hubzylinder;
Fig. 4 als Einzelheit eine Halteleiste der Aufnahmeplatte; und
Fig. 5
   bis 10 verschiedene Phasen des Verfahrensablaufes zur Entnahme von in der Fangplatte der Stapel- und Zählvorrichtung eingestapelten Artikeln und Überführung durch die Aufnahmeplatte in den Stapelkorb.

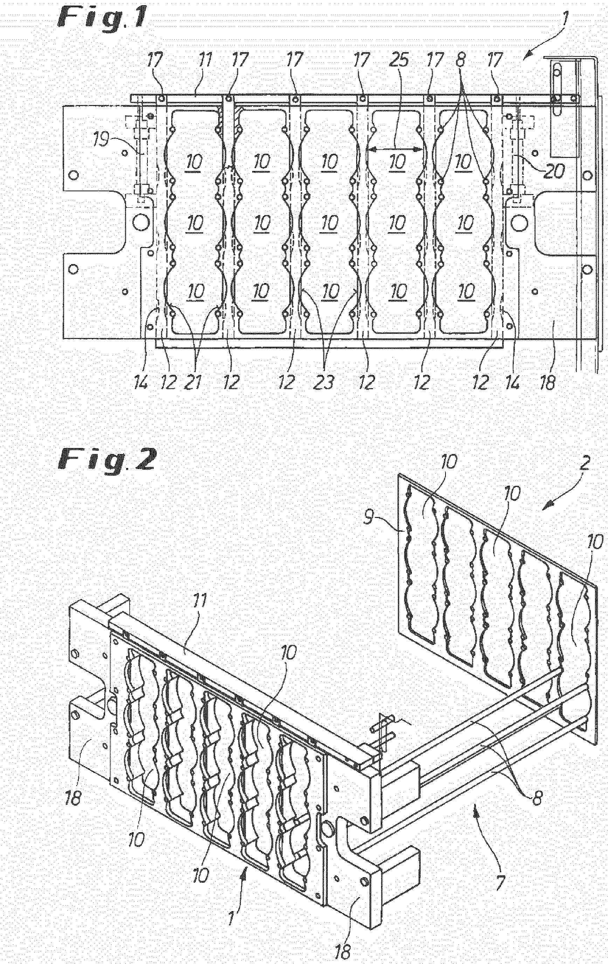

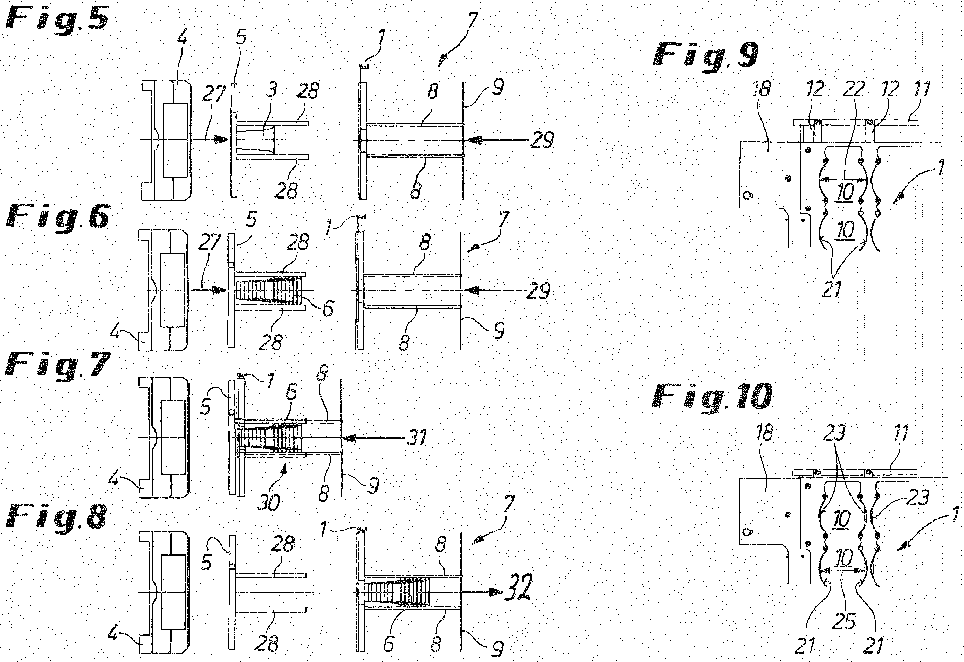

Eine in Fig. 1 dargestellte Aufnahmeplatte 1 ist Teil einer Stapel- und Zählvorrichtung 2, die einer hier nicht dargestellten Thermoformmaschine nachgeschaltet ist, die mittels eines Formwerkzeugs Fertigartikel 3 aus einer erwärmten thermoplastischen Kunststofffolie formt und ausstanzt. Wie sich näher aus den Fig. 5 bis 8 ergibt, wird ein Unterwerkzeug 4 des Thermoformwerkzeugs nach dem Stanzvorgang geschwenkt, wonach die Fertigartikel 3 an eine Fangplatte 5 der Stapel- und Zählvorrichtung 2 übergeben und dort zu Artikelstangen 6 mit einer durch eine speicherprogrammierbare Steuerung der Thermoformmaschine vorgegebenen Anzahl von Fertigartikeln 3 ineinander gestapelt werden.

Die Stapel- und Zählvorrichtung 2 weist weiterhin einen Stapelkorb 7 zur Aufnahme und zum Transport der Artikelstangen 6 auf. Der Stapelkorb 7 setzt sich aus der Aufnahmeplatte 1 und einer mit dieser über horizontal verlaufende Stapelstäbe 8 verbundenen Abschlussplatte 9 zusammen, wobei die von der Fangplatte 5 übernommenen Artikelstangen 6 zwischen jeweils parallel zueinander verlaufenden, Stapelkanäle bildenden Stapelstäben 8 geführt und zentriert werden (vgl. hierzu Fig. 2 und Fig. 5 bis 8).

Sowohl die Aufnahmeplatte 1 als auch die Abschlussplatte 9 ist mit Durchtrittsöffnungen 10 für im Ausführungsbeispiel drei übereinander liegende und fünf nebeneinander liegende Reihen von Artikelstangen 6 ausgebildet, wobei die Kontur der Durchtrittsöffnungen 10 an den Außenumfang der im Ausführungsbeispiel runden, becherförmigen Fertigartikel 3 angepasst ist. Innerhalb der Aufnahmeplatte 1 sind an einer gemeinsamen, vertikal heb- und senkbaren Verschiebeleiste 11 befestigte Halteleisten 12 vorgesehen, wobei den Durchtrittsöffnungen 10 in senkrechter Richtung verlaufend jeweils rechts- und linksseitig eine Halteleiste 12 zugeordnet ist.

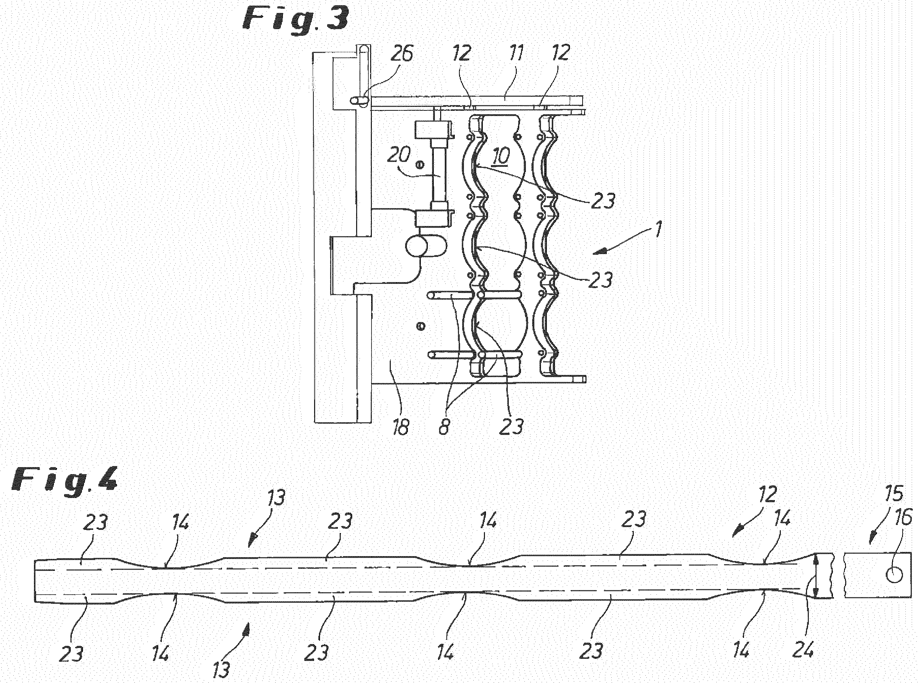

Die Halteleisten 12 sind an ihren den Durchtrittsöffnungen 10 zugewandten Außenseiten 13 mit entsprechend den übereinander liegenden Durchtrittsöffnungen 10 jeweils drei konkaven, halbkreisförmigen Ausnehmungen 14 ausgebildet (vgl. hierzu Fig. 4).

Die Halteleisten 12 werden über eine an ihrem oberen Ende 15 vorgesehene Durchgangsbohrung 16 und eine Schrauben-/Muttern-Kombination 17 an der gemeinsamen Verschiebeleiste 11 befestigt. Die Verschiebeleiste 11 selbst ist über zwei an seitlichen Halteblechen 18 der Aufnahmeplatte 1 angeordneten Hubzylindern 19, 20 in vertikaler Richtung verfahrbar (vgl. hierzu Fig. 1).

Mit den beiden über hier nicht dargestellte Mehrwegeventile angesteuerten Hubzylindern 19, 20 wird ein gleichförmiges Anheben bzw. Absenken der Verschiebeleiste 11 erreicht, so dass die Halteleisten 12 in den Führungen innerhalb der Aufnahmeplatte 1 nicht verkanten können.

Bei über die Hubzylinder 19, 20 angehobener Position der Verschiebeleiste 11 und somit auch der Halteleisten 12 befinden sich die konkaven, halbkreisförmigen Ausnehmungen 14 in Deckungslage mit den äußeren, die Durchtrittsöffnungen 10 begrenzenden Radien 21, so dass das Öffnungsmaß 22 der Durchtrittsöffnungen 10 zum ungehinderten Passieren der Artikel 3 bzw. Artikelstangen 6 vollständig freigegeben wird (vgl. hierzu Fig. 9).

Bei über die Hubzylinder 19, 20 abgesenkter Position der Verschiebeleiste 11 und somit auch der Halteleisten 12 tauchen die Halteleisten 12 mit einem ohne Ausnehmungen 14 ausgebildeten Teilbereich 23, so dass die Halteleisten 12, wie der Fig. 4 zu entnehmen ist, dort ihre Kernbreite 24 besitzen, jeweils seitlich, im Bereich der Begrenzungsradien 21, in die Durchtrittsöffnungen 10 ein und verringern somit das Passier- Öffnungsmaß 22 der Durchtrittsöffnungen 10 (vgl. hierzu Fig. 1, 3 und 10) zu einem Rückhalte-Öffnungsmaß 25.

Sowohl die angehobene als auch die abgesenkte Position der Verschiebeleiste 11 wird von einem Näherungsinitiator 26 überwacht, dessen Schalt- bzw. Steuersignale in die die speicherprogrammierbare Steuerung der Thermoformmaschine eingebunden sind.

Anhand der Fig. 5 bis 10 wird nachfolgend ein Abholvorgang von in der Fangplatte 5 zu einer Artikelstange 6 ineinander gestapelten Fertigartikeln 3 näher beschrieben.

Nach dem Formen und Stanzen der Fertigartikel 3 in der Thermoformmaschine, werden diese von dem Unterwerkzeug 4 taktweise der Fangplatte 5 zugeführt-Pfeilrichtung 27 - und dort zwischen horizontal im Abstand parallel zueinander verlaufenden Stapelstäben 28 zu einer Artikelstange 6 ineinander gestapelt (vgl. Fig. 5 und 6).

Der Stapelkorb 7 mit der Aufnahmeplatte 1 der Stapel- und Zählvorrichtung 2 befindet sich in Warteposition 29, wobei die Verschiebeleiste 11 mit den Halteleisten 12 angehoben ist und durch die konkaven, halbkreisförmigen Ausnehmungen 14 das Passier-Öffnungsmaß 22 der Durchtrittsöffnungen 10 vollständig freigegeben wird.

Nachdem eine vorgewählte Anzahl der Fertigartikel 3 in der Fangplatte 5 zu einer Artikelstange 6 ineinander gestapelt wurde, fährt der Stapelkorb 7 - Pfeilrichtung 31 - von der Warteposition 29 in die Abholposition 30, wobei die Aufnahmeplatte 1 mit den vollständig freigegebenen Durchtrittsöffnungen 10 die Artikelstange 6 mit Luft überfährt, so dass die Artikelstangen 6 beim Passieren durch die Aufnahmeplatte 1 nicht berührt werden (vgl. hierzu Fig. 7).

Sobald die Aufnahmeplatte 1 die Fangplatte 5 erreicht hat und sich die Artikelstange 6 somit zentriert von den Stapelstäben 8 im Stapelkorb 7 befindet, wird die Verschiebeleiste 11 mittels der Hubzylinder 19, 20 abgesenkt, wodurch die konturfreien Teilbereiche 23 der Halteleisten 12 das in seinen Abmessungen geringere Rückhalte- Öffnungsmaß 25 der Durchtrittsöffnungen 10 begrenzen und sich hinter den zuletzt eingestapelten Fertigartikel 3 der Artikelstange 6 legen.

Über die Halteleisten 12 sicher im Stapelkorb 7 abgestützt, werden die Artikelstangen 6 nunmehr in Pfeilrichtung 32 zu einem beispielsweise Förderband transportiert und dort aus dem Stapelkorb 7 entnommen.

### Bezugszeichenliste:

- 1: Aufnahmeplatte
- 2: Stapel- und Zählvorrichtung
- 3: Fertigartikel / Artikel
- 4: Unterwerkzeug
- 5: Fangplatte
- 6: Artikelstange
- 7: Stapelkorb
- 8: Stapelstab
- 9: Abschlussplatte
- 10: Durchtrittsöffnung
- 11: Verschiebeleiste
- 12: Halteleiste
- 13: Außenseite
- 14: konkave Ausnehmung
- 15: obere Ende
- 16: Durchgangsbohrung
- 17: Schrauben-/Muttern-Kombination
- 18: Halteblech
- 19: Hubzylinder
- 20: Hubzylinder
- 21: äußere Radien / Begrenzungsradien
- 22: Passier-Öffnungsmaß
- 23: Teilbereich
- 24: Kern breite
- 25: Rückhalte-Öffnungsmaß
- 26: Näherungsinitiator
- 27: Pfeilrichtung
- 28: Stapelstab
- 29: Warteposition
- 30: Abholposition
- 31: Pfeilrichtung
- 32: Pfeilrichtung

## Patentansprüche

1. Thermoformmaschine mit einer speicherprogrammierbaren Steuerung zum Formen und Stanzen von tiefgezogenen, beliebigen becher- oder deckelartigen Artikeln (3) aus thermoplastischem, über einen intermittierenden Folientransport zugeführtem Kunststoff oder dergleichen, umfassend ein mit mehreren über- bzw. nebeneinander liegenden Artikelreihen ausgebildetes Mehrfach-Form- und Stanzwerkzeug, bestehend aus einem Oberwerkzeug und einem zum Abstapeln der Fertigartikel (3) ausschwenkbaren Unterwerkzeug (4), dem in einer nachgeschalteten automatischen Stapel- und Zählvorrichtung (2) eine die nach dem Schwenken des Maschinentisches bzw. des Unterwerkzeugs aus der Maschine ausgestoßenen Artikel (3) in komplementären Ausnehmungen zu Artikelstangen (6) zusammenführende, verfahrbare Fangplatte (5) zugeordnet ist, wobei die fertigen Artikelstangen (6) der Fangplatte (5) von einer mit an die Kontur der Artikel angepasste Durchtrittsöffnungen (10) aufweisenden Aufnahmeplatte (1) eines Stapelkorbes (7) überfahren und in den Stapelkorb (7) zum weiteren Transport übergeleitet werden,
**dadurch gekennzeichnet,**
**dass** innerhalb der Aufnahmeplatte (1) an einer gemeinsamen, verfahrbaren Verschiebeleiste (11) befestigte Halteleisten (12) vorgesehen sind, die einerseits in einer ersten Verfahrposition die Durchtrittsöffnungen (10) zum Passieren der Artikelstangen (6) vollständig freigeben und andererseits in einer zweiten Verfahrposition in die lichte Kontur der Durchtrittsöffnungen (10) eintauchen und deren Passier- Öffnungsmaß (22) zu einem Rückhalte-Öffnungsmaß (25) verringern, wobei die Halteleisten (12) an ihren den Durchtrittsöffnungen (10) zugewandten Außenseiten (13) mit zum Rastermaß der voneinander beabstandeten Durchtrittsöffnungen (10) entsprechend konturangepassten Ausnehmungen (14) versehen sind, die bei angehobener Verschiebeleiste (11) das Passier- Öffnungsmaß (22) der Durchtrittsöffnungen (10) vollständig freigeben, während die Halteleisten (12) bei abgesenkter Verschiebeleiste (11) mit ihren eine Kernbreite (24) definierenden, ohne Ausnehmung (14) ausgebildeten Teilbereichen (23) in die Durchtrittsöffnungen (10) hineinragen und deren Rückhalte-Öffnungsmaß (25) eingrenzen.

2. Thermoformmaschine nach Anspruch 1,
**dadurch gekennzeichnet,**
**dass** die die Halteleisten (12) tragende Verschiebeleiste (11) über mindestens einen an der Aufnahmeplatte (1) angeordneten Hubzylinder (19, 20) verfahrbar ist.

3. Thermoformmaschine nach Anspruch 1 oder 2,
**dadurch gekennzeichnet,**
**dass** zum Erfassen und zur Überwachung der angehobenen und abgesenkten Position der Verschiebeleiste (11) ein optischer Näherungsinitiator (26) am Stapelkorb (7) angeordnet ist, der mit der speicherprogrammierbaren Steuerung der Thermoformmaschine verbunden ist.

## Claims

1. Thermoforming machine with a programmable logic controller for forming and punching any deep-drawn cup- or lid-like articles (3) made from a thermoplastic material or similar supplied via an intermittent film transport system, comprising a multifunctional forming and punching tool constructed with multiple article rows disposed above and/or adjacent to each other, consisting of an upper tool and a lower tool (4) which can be swivelled outwards for the purpose of stacking the finished products (3), and to which is allocated a retaining plate (5) that is movable in an automatic stacking and counting device (2) arranged downstream therefrom to collect the articles (3) ejected from the machine in article stacks (6) in complementary recesses after the machine table or lower tool has been swivelled, wherein a receiving plate (1) of a stacking basket (7) having passthrough openings (10) adapted to the shape of the articles passes over the stacks (6) of finished articles in the retaining plate (5) and the articles are transferred to the stacking basket (7) for further transport, **characterized in that** retaining bars (12) are fastened to a shared, movable sliding bar (11) inside the receiving plate (1), and which initially in a first traversing position leave the passthrough openings (10) completely unobstructed to allow the article stacks (6) to pass through, and then in a second traversing position protrude into the unobstructed contour of the passthrough openings (10), reducing the passing dimension (22) of the opening to a retaining dimension (25) of the opening, wherein the outer sides (13) of the retaining bars (12) closest to the passthrough openings (10) are furnished with cutaways (14), the contours of which are adapted to correspond to the grid dimension in the spaced arrangement of passthrough openings (10), which leave the passing dimension (22) of the passthrough openings (10) completely unobstructed when the sliding bar (11) is raised, and when the sliding bar (11) is lowered, portions (23) of the retaining bars (12) without a recess (14) which define a core width (24) protrude into the passthrough openings (10) and limit the retaining dimension (25) of the opening thereof.

2. Thermoforming machine according to claim 1, **characterized in that** the sliding bar (11) that supports the retaining bars (12) is movable via at least one lifting cylinder (19, 20) arranged on the receiving plate (1).

3. Thermoforming machine according to one of claim 1 or 2, **characterized in that** an optical proximity switch (26) connected to the programmable logic controller of the thermoforming machine is arranged on the stacking basket (7) to detect and monitor the raised and lowered positions of the sliding bar (11).

## Revendications

1. Machine à thermoformer avec un automate programmable pour former et emboutir des articles (3) quelconques, emboutis profond de types gobelets ou couvercles en matière synthétique thermoplastique, acheminés sur un transport à feuille intermittent ou système analogue, comprenant un outil de formage et d'emboutissage multiple constitué de plusieurs séries d'articles situées les unes sur les autres ou les unes à côté des autres, composé d'un outil supérieur et d'un outil inférieur (4) pouvant pivoter pour désempiler les articles finis (3), auquel est attribuée une plaque de saisie (5) mobile réunissant en barres d'articles (6) dans des cavités complémentaires dans un dispositif automatique de d'empilage et de comptage monté en aval (2), les articles (3) sortis de la machine après pivotement de la table de machine ou de l'outil inférieur, les barres d'articles (6) finies de la plaque de saisie (5) passant d'une plaque de réception (1) d'une corbeille d'empilage (7) comportant des ouvertures de passage (10) adaptées au contour des articles et étant transférées dans la corbeille d'empilage (7) pour poursuivre le transport, **caractérisée en ce qu'**à l'intérieur de la plaque de réception (1) des baguettes de maintien (12) fixées à une barre coulissante (11) commune mobile sont prévues,qui libèrent complètement d'une part dans une première position de déplacement les ouvertures de passage (10) pour faire passer les barres d'articles (6) et s'enfoncent d'autre part dans une deuxième position de déplacement dans le contour libre des ouvertures de passage (10) et dont la dimension d'ouverture de passage (22) se réduit en une dimension d'ouverture de retenue (25), les baguettes de maintien (12) étant munies sur leurs côtés extérieurs (13) tournés vers les ouvertures de passage (10) d'ouvertures de passage (10) à distance les unes des autres à une dimension modulaire correspondant aux cavités (14) adaptées au contour, qui libèrent complètement la dimension d'ouverture de passage (22) des ouvertures de passage (10) lorsque la barre coulissante (11) est relevée, pendant que les baguettes de maintien (12) pénètrent, la barre coulissante (11) étant abaissée, dans les ouvertures de passage (10) avec leurs zones partielles (23) constituées sans cavité (14) définissant une largeur de noyau (24) et en limitent leur dimension d'ouverture de retenue (25).

2. Machine à thermoformer selon la revendication 1, **caractérisée en ce que** la barre coulissante (11) supportant les baguettes de maintien (12) peut être déplacée par au moins un vérin de levage (19, 20) disposé sur la plaque de réception (1).

3. Machine à thermoformer selon la revendication 1 ou 2, **caractérisée en ce que** pour saisir et surveiller la position relevée et abaissée de la barre coulissante (11), un capteur de proximité (26) est disposé sur la corbeille d'empilage (7) qui est reliée à l'automate programmable de la machine à thermoformer.
